Europäisches Patentamt

(19) European Patent Office

Office européen des brevets

(11) Publication number: **0 015 725**
**B1**

(12) **EUROPEAN PATENT SPECIFICATION**

(45) Date of publication of patent specification: **13.04.83**

(51) Int. Cl.³: **C 09 C 1/64, C 09 C 3/08**

(21) Application number: **80300607.1**

(22) Date of filing: **28.02.80**

(54) **Non-leafing aluminium flake pigment and method of making same.**

(30) Priority: **28.02.79 US 16666**
**28.02.79 US 16707**

(43) Date of publication of application:
**17.09.80 Bulletin 80/19**

(45) Publication of the grant of the patent:
**13.04.83 Bulletin 83/15**

(84) Designated Contracting States:
**DE FR GB NL**

(56) References cited:
**US - A - 3 264 129**
**US - A - 3 615 341**
**US - A - 3 694 239**
**US - A - 3 781 177**

(73) Proprietor: **ALCAN RESEARCH AND
DEVELOPMENT LIMITED
1, Place Ville Marie
Montreal Quebec H3C 3H2 (CA)**

(72) Inventor: **Bell, Harry Edward
26 Buck Road
East Brunswick, New Jersey 00816 (US)**

(74) Representative: **Pennant, Pyers et al,
Stevens, Hewlett & Perkins 5 Quality Court
Chancery Lane
London, WC2A 1HZ (GB)**

# 0015725

Non-leafing aluminium flake pigment and method of making same.

This invention relates to non-leafing aluminium flake pigment compositions and processes for making same.

Both lea..ng and non-leafing aluminium flake pigments are constituted of minute flakes of aluminium (including aluminium alloys). They are used in paints, inks and other finishes to impart metallic lustre and/or silvery colour.

Leafinç flake pigments, when dispersed in a vehicle having sufficiently high surface tension, become arranged in parallel relation at the surface of an applied coating, so as to provide a highly reflective layer that simulates the appearance of bare metal.

Non-leafing flake pigments (with which the present invention is concerned), on the other hand, in an applied coating layer are predominantely disposed in random attitudes to the coating surface, providing a less reflective appearance than a leafing pigment. Non-leafing aluminium flake pigments are desirable in thin coatings of the order of 10—15 microns which are subject to surface abrasion and weathering.

Leafing and non-leafing aluminium flake pigments alike are conventionally produced by reducing aluminium particles (such as foil scrap or aluminium powder) by milling the particles in a ball mill, stamping mill or other equipment capable of flattening and breaking up the particles. The milling is performed in the presence of a minor proportion by weight of a "milling agent" such as fatty acid. Milling may be performed either dry or wet in a liquid hydrocarbon such as mineral spirits. Wet milling is often preferred to dry milling as a precaution against explosion in view of the pyrophoric characteristics of aluminium powder. After milling, the flake particles may in some instances by subjected to various additional treatments.

Presence of the milling agent in the milling operation ensures that the aluminium particles are flattened into flake form and prevents cold welding of the particles. The milling agent coats the particles and leaves a residue after milling. The milling agent residue imparts certain characteristics to the finished flake product and protects the flake particles to preserve the brightness or lustre, while reducing the hazard of fire or explosion in handling aluminium powder. It is believed that some milling agent residue may be bonded chemically to the flakes.

Leafing aluminium flake pigments are commonly made by using, as the milling agent, saturated straight chain fatty acids such as stearic and/or palmitic acids which are known to impart leafing properties to the flakes. Leafing is believed attributable to the layer of residue of such milling agent on the produced flakes, and in particular to surface tension effects caused by that layer. These acids are highly efficient milling agents in terms of the proportion of total particulate aluminium charge that is reduced to flakes of the desired particle size in a single pass through a mill. The operations involved in making leafing aluminium flakes are simple, straightforward and convenient.

In contrast, current methods of making non-leafing aluminium flake pigments are attended with serious difficulties and disadvantages. The pigments made in accordance with these methods have shown deficiencies in one or more of the following characteristics when dispersed in a film-forming vehicle: tinting strength, opacity, metallic lustre or brightness, flop (change in colour intensity with change in viewing angle), and freedom from agglomeration and graininess.

In one current commercial process for producing non-leafing pigment aluminium particles are milled in the presence of a leafing milling agent (e.g. stearic and/or palmitic acid). The resultant flakes are then treated with deleafing agents such as lead naphthenate or octoate, aqueous phosphates or acetic acid.

In another process for preparing non-leafing flake pigment, an unsaturated fatty acid such as oleic acid, is used as the milling agent.

Neither of these current processes has efficiency in milling or in the provision of a product of desired characteristics comparable with the process for producing leafing pigment.

In chemically deleafing a leafing flake pigment an additional step is required after milling. The deleafing agents, which remain in the product, are considered undesirable contaminants. In addition, the deleafing stop sometimes tends to agglomerate the flake particles. Chemically deleafed pigments are dull and unattractive, possibly owing to etching of the flake surfaces by the deleafing agent.

Known non-leafing milling agents, such as oleic acid, are relatively ineffective milling agents and milling times must be short to avoid product degradation. The milled metal commonly contains high levels of oversized flake particles which may constitute as much as 30% of the total feed. This necessitates remilling and screening to obtain a properly sized pigment. Use of the unsaturated oleic acid also apparently results in lower extent of protective covering of the flakes than is provided by the saturated fatty acid leafing milling agents and consequently, when using oleic acid, the production of so-called dry pigments is essentially restricted to very coarse grades.

Pigments made with oleic acid form agglomerates upon standing and often this renders them unusable after relatively short periods of storage. Moreover, oleic acid affords poor particle size control and, consequently, inconsistent tinting strength and opacity in the product.

Alternative methods for producing non-leafing aluminium flake pigments have been described in

2

**0015725**

U.S.—A—2,858,230, 3,264,129 and 3,389,105 but have not found commercial acceptance.

It has already been proposed in U.S.—A—3,781,177 to treat a previously milled aluminium flake powder with iso-stearic acid to agglomerate and thereby dedust the powder for use in explosives. Such agglomeration is undesirable for pigments and does not lead to an acceptable non-leafing pigment.

It has now been unexpectedly discovered that an aluminium flake pigment bearing a surface layer of a residue of a milling agent, of which a substantial, usually a major proportion, is iso-stearic acid, exhibits non-leafing properties. Such fatty acid is preferably in admixture with an unsaturated fatty acid, such as oleic acid, in the milling agent. Iso-stearic acid, as defined below, is also advantageous for its ready commercial availability and ease of handling.

The non-leafing pigment of the invention is characterised by high opacity, consistent tinting strength, and freedom from undue flop and graininess. This aluminium flake pigment can be produced by milling in the presence of the branched chain saturated fatty acid milling agent either alone or with an amount of a non-leafing unsaturated fatty acid milling agent, such as oleic acid, known to be effective to reduce residual leafing effects.

The term "iso-stearic acid" as used herein is not restricted to 16-methylheptadecanoic acid but includes mixtures of saturated fatty acids of the general formula $C_{17}H_{35}COOH$. These are complex mixtures of isomers, usually liquid at room temperature and primarily of the methyl-branched series, which are mutually soluble and virtually inseparable. In commercial iso-stearic acid the acid components do not all contain eighteen carbon atoms. The branching is primarily methyl but may possibly include some ethyl and is typically towards the centre of the chain, but is fairly random. The production of iso-stearic acid is described in U.S.—A—2,664,429 and 2,812,342. One suitable iso-stearic acid is marketed commercially by Emery Industries, Inc., under the trade name Emery 871 Isostearic Acid. Typical characteristics of the Emery 871 acid are listed in the following table:

| | |
|---|---|
| Titer, °C max. | 10 |
| Iodine value, max. | 10 |
| Free fatty acid, % | 88 |
| Acid value | 175 |
| Saponification value, min. | 180 |
| Average molecular weight (approx.) | 584 |
| Refractive index, 25°C | 1.4603 |
| Viscosity, cps., 25°C | 48 |

Thus the acid exhibits a low content of unsaturated components and an average $C_{18}$ chain length.

As already stated, the milling agent preferably also includes an amount of another non-leafing milling agent effective to reduce any residual leafing characteristics of pigment product produced with iso-stearic acid milling agent. Such other agent is preferably one or more substance conveniently used as non-leafing milling agents, for example unsaturated fatty acids such as oleic, linoleic, and ricinoleic acids.

The weight of milling agent required for reduction of the particulate aluminium to flakes is only a minor percentage of the weight of aluminium subjected to milling. It is preferred that the weight of iso-stearic acid employed be equal to 3—7%, more preferably 4—5%, by weight of the aluminium particle charge. The weight of unsaturated fatty acid milling agent (if used) should preferably be 1.5—3%, preferably 2—3% by weight of the aluminium charge. In proportions within the above-stated range, the oleic acid (or other non-leafing agent) does not cause undesired agglomeration of the present product even after storage for many months.

The milling step may be performed in a mill of any type conventionally employed to produce aluminium flake in the presence of a leafing milling agent. The milling of aluminium particles can be performed either as a dry-milling operation (with only the milling agent present), or as a wet-milling operation using a liquid wet-milling vehicle that is essentially inert with respect to the aluminium charge and the milling agent. Suitable wet-milling vehicles include mineral spirits, i.e. blends of aliphatic hydrocarbons which can contain aromatic hydrocarbons, as well as naphthas, and low boiling and higher boiling petroleum fractions.

The mill is operated for a time sufficient to reduce the aluminium charge to flake form and to a particle size below a selected maximum value. The selection of the aluminium charge, milling apparatus, wet or dry milling condition, duration of milling, final particle size distribution (as well as the ratio of ball charge to aluminium charge, and ball size distribution, when a ball mill is employed) and other conditions are all in accordance with conventional aluminium flake milling techniques well known

3

in the art, such as described in U.S.—A—3,776,473.

At the end of the milling time, the flake pigment product is discharged from the mill, as a dry particulate if dry milling has been performed, or, when wet milling is employed, in a mixture with the wet-milling liquid vehicle. This product is a pigment having, on the pigment particles, a surface layer of the milling agent residue. It is believed that the milling agent residue is a limited reaction product of the milling agent and aluminium, reacted under influence of the milling conditions.

A particular advantage of the use of iso-stearic acid as a milling agent is that while providing a bright non-leafing pigment, the milling agent residue imparts a higher level of protective coverage to the produced flake particles, and leaves a larger amount of free milling agent present with the pigment, than is attainable by use of an unsaturated fatty acid (e.g. oleic acid) alone as a milling agent. Thus, whereas milling to produce non-leafing aluminium flake pigments with conventional non-leafing milling agents is known to be hazardous, especially when making very fine grades of such product, owing to the high reactivity of the freshly milled flake with oxygen and to the low levels of unsaturated fatty acid protecting the flake, the present invention enables performance of milling at ambient conditions (preferably with some cooling of the mill for added safety) without substantial risk of fires and/or explosion.

The particle size distribution of the produced pigment exhibits little variation from one batch to another. Very advantageously, iso-stearic acid enables milling to be continued (without excessive product degradation) for long times to achieve high operating efficiency in terms of proportion of total particle charge reduced below a given upper size limit on a single pass of the charge through a mill. The particle size of the non-leafing flake pigment product may be controlled by the duration of the milling step. The average duration of the ball-milling operation is usually from two to 24 hours, and most commonly between about two and about seven hours.

As specified in ASTM Standard D962, a fine pigment is one at which a maximum of 0.1 wt % is retained on a number 325 Tyler mesh sieve (about 45 microns); a medium fine pigment is one wherein a maximum of 1.0 wt % is retained on a 325 sieve; and a medium pigment is one wherein a maximum of 11 wt % is retained on a 325 sieve. To make medium pigments (using a ball mill for the milling step), a milling time of about three hours is used with standard ball charges, and about five hours for the fine grades. If a still finer product is desired, longer milling times are used.

After milling, the flake-vehicle mixture is screened to remove oversized particles. Where oleic acid was used as the sole milling agent for producing a non-leafing flake product as much as 30% by weight would be oversized material. The oversized material required further milling to break it down to the desired size. Such successive screening steps and further processing have heretofore been a manufacturing bottleneck. The high milling efficiency (typically above 95%, in terms of weight percent of aluminium pigment product particles below upper size limit after a single pass through the mill) achieved in the practice of the present invention through the use of iso-stearic acid eliminates these successive re-millings and screenings.

When the milling step of the present process is performed as a wet-milling operation, so that the produced pigment is delivered from the mill in mixture with the liquid wet-milling vehicle used, the mixture (after screening or sizing as described above) is filtered to remove excess liquid vehicle and thereby to form a paste. If it is desired to store or sell the paste as a pigment, the metals content of the paste can be adjusted to a conventional value (60—75%, preferably 65—72% by weight) by mixing the paste with a liquid carrier such as mineral spirits.

In some instances, additional saturated fatty acids are added to the paste, preferably during the addition of mineral spirits. The fatty acid acts as an antipyrophoric and dispersing agent. The fatty acid may, for example, be lauric acid or other saturated fatty acid (even an acid that would act as a leafing milling agent if present during milling). Such addition may be made after the milling step, preferably after screening, during the adjustment of the non-volatiles content. The preferred amount of such straight chain saturated fatty acid is $1\frac{1}{2}$—3% by weight, preferably about 2%, based upon the metal content. It should be noted that if lauric acid is added during milling, it has been found that some leafing results in the flake product, but the post-milling addition of lauric acid does not cause leafing to occur. In place of lauric acid, additional iso-stearic acid may be added to form a paste product.

In many instances, however, it is preferred to produce a "dry" pigment product, especially where the pigment is intended for use in a paint or ink vehicle, in which a liquid carrier, such as mineral spirits, would have adverse effects. Consequently in wet-milling, the filtered paste is treated to remove the volatiles content (wet-milling vehicle) by vacuum, with or without heating, to provide the pigment in the desired dry condition.

Provision of a "dry" pigment product is accomplished without undue hazard owing to the protection afforded by the layer of iso-stearic acid milling agent residue on the milled flakes. It will be understood that the flakes of the "dry" product retain this milling agent residue coating.

The pigment product of the invention, whether provided as a "dry" product or as a paste, is capable of prolonged storage without agglomeration or other deterioration. Typically, the pigment product is used by mixing with a paint or ink vehicle comprising a film-forming binder and a solvent or thinner. In performance tests it has been found that the use of fine pigments (made according to this invention) in standard commercial formulations results in a bright, silvery appearance of such opacity that the amount of pigment can be substantially reduced (as compared with prior non-leafing aluminium flake pigments).

By way of further illustration of the invention, reference may be made to the following specific examples:

In the following examples, various methods were used to identify and evaluate specific characteristics of the product of the instant invention.

*Leafing Characteristics*

One or more of the following tests were performed to determine leafing characteristics.

*ASTM D480* — In accordance with this test the indicated flake pigment sample is subjected to procedures incorporated in ASTM designation D480-70 as reapproved in 1976 to determine the leafing characteristics. The results are given in % of leafing.

*Mineral Spirits* — In accordance with this test a sample portion of the flake pigment is placed in an appropriate vessel and mineral spirit solvent is added with stirring. Leafing is indicated by observing the presence of a shiny (silvery) film on the surface of the mixture. (Usually used with ASTM D480).

*Xylene* — In accordance with this test a sample portion of the flake is placed in an appropriate vessel and xylene solvent added with stirring. Leafing is indicated by observing the presence of a shiny (silvery) film on the surface of the mixture. (Usually used with ASTM D480).

*Gray Enamel Sprayout*

In this test, sample panels are prepared in accordance with the following procedure. A coating composition is prepared by mixing the pigment with toluene and a specified amine accelerator. A 4" x 6" mild steel panel electrolytically plated with tin is rubbed with a grit cloth until the full surface has been sanded and is then cleaned with a solvent.

The coating composition is applied to the prepared panel using a standard spray gun set at selected gun pressure and held perpendicular to the panel surface. Three alternate, overlapping right and left passes are sprayed onto the panel. The panel is then inverted and three more overlapping passes are sprayed.

The sample panels are then tested for gloss and total reflectance in accordance with standard practices.

*Gloss* — In taking gloss readings, a meter with a 60° gloss head is standardized using highly polished black glass such as onyx or carraren. Gloss values are determined accordingly.

*Total Reflectance* — Total reflectance is determined by use of a reflectometer comprised of an integrating sphere coated with a reflecting medium such as $MgO$ in $CaCO_3$, a photo detector and a meter. A light source is directed upon the wall of the coated sphere and the meter is adjusted to 100% (a perfect mirror would theroetically reflect 100% of light directed on its surface). In the test situation, the panel to be tested is substituted for the coated sphere and the percent reflectance gauged by the meter.

*Thin Coat Gray Enamel Sprayout*

In this test sample panels are prepared using the apparatus and procedures described in the Gray Enamel Sprayout test. The coating admixture used in the Gray Enamel Sprayout is thinned with toluene (two parts by weight of coating to one part by weight of toluene). The sprayed panels are dried and observed by naked eye for seediness and/or graininess and agglomerated appearance of the coating.

*Nitrocellulose Lacquer Drawdown*

In this test a mixture comprised of a metal flake pigment sample, a thinner and a nitrocellulose lacquer base is poured onto white, 70# litho paper in sufficient quantity to form a 2.5 cm diameter portion of mixture. The paper is then drawn between a base plate and a spreading bar to distribute the mixture on the paper. The paper containing the distributed mixture is then placed in a 65°C oven for one minute to expedite drying. The dried sample is then tested for gloss and total reflectance using the standard procedures described in the Gray Enamel Sprayout test.

Example 1

A laboratory size ball mill containing 270 kgs of milling balls was charged with the following

| | |
|---|---|
| atomized aluminium powder | 4.3 kgs |
| iso-stearic acid* | 0.195 kgs |
| mineral spirits | 10.8 litres |

\* Emery 875 sold by Emery Industries, Inc., Cincinatti, OH

The mill was run for three hours at 44 rpm. The resultant product was screened through a 325- mesh Tyler screen to produce an extra fine grade pigment. The product weighed about 5 kgs (at 71.52% non-volatiles level), representing a yield of 83.67%. A sample of the product material was adjusted with mineral spirits to about 65% non-volatiles to establish a standard formulation for testing.

The resultant product showed the following characteristics after being subjected to the indicated test:

*Leafing Characteristic*

Astm D480          18%

*Nitrocellulose Lacquer Drawdowns*

Gloss: 60° = 30

Total Reflectance: 60

*Gray Enamel Sprayouts*

Gloss: 60° = 38

Total Reflectance = 100

*Thin Coat Gray Enamel Sprayout*

The dried finish had a non-agglomerated, non-grainy appearance.

Example 2

This example shows the use of an addition of oleic acid. Using the equipment operated under the conditions of Example 1, the ball mill was charged with the following:

| | |
|---|---|
| atomized aluminium powder | 4.3 kgs |
| iso-stearic acid* | 0.195 kgs |
| oleic acid | 0.129 kgs |
| mineral spirits | 10.8 litres |

\* Emery 861 sold by Emery Industries, Inc., Cincinnati, OH

The amount of paste obtained was about 5 kgs, representing a yield of 84.75% (at 75.18% non-volatiles level). A sample of the product material was adjusted with mineral spirits to about 65% non-volatiles to establish a standard formulation for testing. The mineral spirit solvent contained 3% stabilizer based on the metal content.

The sample, thus adjusted, was screened through a 325-mesh Tyler sieve. At a non-volatile content of 64.72% only 0.03% by weight of the original sample remained on top of the sieve. No re-screening was deemed necessary. The resultant product showed the following characteristics after being subjected to the indicated test:

*Leafing Characteristics*

| | |
|---|---|
| ASTM D480 | not deemed necessary |
| mineral spirits | none |
| xylene | trace |

*Nitrocellulose Lacquer Drawdowns*

Gloss: 60° = 30

Total Reflectance = 60

**0015725**

*Gray Enamel Sprayouts*

Gloss: 60° = 38

Total reflectance = 102

*Thin Coat Gray Enamel Sprayout*
The dried finish had a non-agglomerated, non-grainy appearance.

The remainder of the product (without additional stabilizer) was stored in a loosely sealed pail for eight months. Upon examination it was found substantially agglomeration free. This is in contrast with prior art non-leafing pigment milled in the presence of oleic acid milling agent which is found to agglomerate, in the absence of stabilizer, in about twenty-four hours.

Example 3
In this example commercial grade extra fine, medium fine and medium non-leafing pastes were prepared with the use of an iso-stearic acid milling agent.
Two identical mill runs were used to produce extra fine non-leafing paste. To a commercial ball mill containing 13500 kgs ball charge of standard mix, having an average diameter of about 7 mm, was added:

| | |
|---|---|
| atomized aluminium powder | 430 kgs |
| iso-stearic acid | 19 kgs |
| oleic acid | 12 kgs |
| mineral spirits | 570 litres |

The milling time was $6\frac{1}{4}$ hours at 31 rpm. In each case the resultant product was screened through a 250-mesh Tyler sieve with virtually no perceivable oversize particles.
After filtering, the product from the two runs was combined and adjusted to about 65% non-volatile with mineral spirits. 2% Lauric acid by weight based on the metal content was added. The actual non-volatile content was 68.55% with only 0.05%, by weight, being retained on a 325-mesh Tyler sieve. The resultant product showed the following characteristics after being subjected to the indicated test:

*Leafing Characteristics*

| | |
|---|---|
| ASTM D480 | 0% |
| mineral spirits | none |
| Xylene | trace |

*Nitrocellulose Lacquer Drawdowns*

Gloss: 60° = 28

Total reflectance = 58

*Gray Enamel Sprayout*

Gloss: 60° = 32

Total reflectance = 104

*Thin Coat Gray Enamel Sprayout*
The dried finish had a non-agglomerated, non-grainy appearance.
Two additional mill runs were made using the same equipment operated under very similar conditions and mill charges to demonstrate the effect of milling time. A medium flake pigment was milled for 3 hours and screened through 160 Tyler sieve and a medium fine flake product was milled for 5 hours and screened through 250 Tyler sieve.
In each run the entire product passed the indicated sieve and was filtered to recover a paste which was adjusted to about 65% non-volatiles with mineral spirits. Two percent lauric acid by weight

7

was added to enhance dispersability of the flake. The resultant products showed the following characteristics after being subjected to the indicated tests:

|  | Medium | Medium Fine |
|---|---|---|

### % Retained on 325 Tyler Mesh Screen

| 0.96% | 0.31% |
|---|---|

### Leafing Characteristics

| ASTM D480 | 0% | ASTM D480 | 0% |
|---|---|---|---|
| mineral spirits | none | mineral spirits | none |
| xylene | trace | xylene | trace |

### Nitrocellulose Lacquer Drawdown

| Gloss: 60° = 30 | Gloss: 60° = 44 |
|---|---|
| Total reflectance = 61 | Total reflectance = 60 |

### Thin Coat Gray Enamel Sprayout

| good appearance | good appearance |
|---|---|
| slight graininess due to coarseness of pigment | no graininess |
| no agglomoeration | no agglomeration |

This example shows that use of iso-stearic acid milling agent yields non-leafing products, each of which exhibits good tinting strength, hiding and dispersability characteristics under similar conditions to those employed in producing leafing flake pigments.

Example 4

In this example, three grades of "dry" non-leafing aluminium flake pigments were produced in accordance with the invention using a commercial ball mill: Formulation A — extra fine, Formulation B — medium fine and Formulation C — medium. The formulations in Table 1 resulted in the yields and characteristics in Table 2.

TABLE 1

|  | Extra-Fine Formulation A | Medium Fine Formulation B | Medium Formulation C |
|---|---|---|---|
| atomized aluminium powder (kgs) | 41 | 54 | 50 |
| iso-stearic acid (kgs) | 2 | 2 | 2.2 |
| oleic acid (kgs) | 1.1 | 1 | 1.1 |
| mineral spirits (litres) | 68 | 72 | 81 |
| ball charge (kgs) 5/16" diam. ave. | 2700 | 2700 | 2700 |
| milling time (hrs) | 4 | 3 | $2\frac{3}{4}$ |
| rpm | 46 | 46 | 46 |
| screen, mesh (Tyler) | 250 | 250 | 160 |

8

TABLE 2

| | Formulation A | Formulation B | Formulation C |
|---|---|---|---|
| yield | 100% | 100% | 100% |
| non-volatile (%) | 73.2 | 75.8 | 76.0 |
| leaf (%) (ASTM D480) | 0 | 0 | 0 |
| +325 mesh at 65% non-volatile | 0.12% | 0.43% | 1.68% |

Formulations B and C were then dried to produce a dry flake product. The dry flake from Formulations B and C were combined with the constituents in the proportions shown in Table 3. The resultant mixtures were then placed in a Stokes steam jacketed vacuum drier for the length of time indicated. After drying, the mixtures were screened and tested, the results of such tests being indicated in Table 4.

TABLE 3

| | | Formulation B | Formulation C |
|---|---|---|---|
| Formulation B (75.8% non-volatiles) | parts | 500 | — |
| Formulation C (76.0% non-volatiles) | parts | — | 600 |
| iso-stearic acid | parts | 7.5 | 9 |
| aluminium pellets | parts | 1000 | 100 |
| drying time (hr) | | 4.5 | 3.5 |
| screen, mesh (Tyler) | | 100 | 100 |

TABLE 4

| | Formulation B | Formulation C |
|---|---|---|
| leaf, % (ASTM D480) | 0 | 0 |
| +325 mesh, % at 99.5 non-volatile | 0.45 | 1.24 |

This example shows that fine grade aluminium flake pigments can be prepared effectively in accordance with the invention.

Example 5

In this example two commercially available aluminium flake pigment materials of equivalent grade were mixed with iso-stearic acid in various percentages to determine the effect on flake which has been milled in accordance with conventional techniques and milling agents.

First a non-leafing aluminium flake milled with oleic as milling agent was mixed with iso-stearic acid in different proportions. A portion of each sample was then subjected to the ASTM D480 leafing test as well as screening through a 325-mesh (Tyler) sieve with the following results:

**0015725**

TABLE 5

| Sample # | % Iso-stearic Acid | Leafing % | % Material retained on 325-mesh Sieve |
|---|---|---|---|
| 1 | 0 | 0 | 9.76 |
| 2 | 0.1 | 0 | 8.50 |
| 3 | 1 | 0 | 5.56 |
| 4 | 2 | 0 | 6.06 |
| 5 | 3 | 0 | 7.34 |
| 6 | 4 | 0 | 7.55 |
| 7 | 5 | 0 | 6.46 |

A leafing aluminium flake pigment was then admixed with iso-stearic acid. The same tests were performed as in the case of the non-leafing flake with the following results:

TABLE 6

| Sample # | % Iso-stearic Acid | Leafing % | % Material retained on 325-mesh Sieve |
|---|---|---|---|
| 1 | 0 | 33 | 6.93 |
| 2 | 0.1 | 27 | 6.89 |
| 3 | 1 | 32 | 5.18 |
| 4 | 2 | 35 | 3.96 |
| 5 | 3 | 28 | 3.66 |
| 6 | 4 | 24 | 1.93 |
| 7 | 5 | 28 | 3.25 |

As can be seen from the table, addition of iso-stearic acid had little effect on the leafing characteristics of the flake. The dispersability was slightly enhanced as evidenced by the decreasing amount of material remaining on the 325-mesh sieve.

This example shows that the addition of iso-stearic acid after milling has substantially no effect on leafing (or non-leafing) characteristics of flake milled with conventional milling agents.

Example 6

In this example iso-stearic acid was added to a commercial non-leafing pigment milled in the presence of oleic acid (Formulation D) to show the effect of addition of iso-stearic acid on agglomeration characteristics.

This was compared with Formulation A of Example 4. Samples of both formulations were first washed with petroleum ether, then dried on a vacuum pump. Iso-stearic acid was then added to the dry powder in the amount indicated as Table 7. Each sample was thoroughly admixed on a laboratory roller in a metal container for 15 minutes. The samples were checked initially, after 24 hours and after 72 hours for agglomeration and seediness. The results are indicated in Table 7.

10

**0015725**

TABLE 7

| Formulation | Agglomeration and Seediness | | |
| % iso-stearic acid | Initial | 24 hours | 72 hours |
|---|---|---|---|
| A (0%) | none | trace | trace |
| D (0%) | none | trace | moderate |
| D (0.1%) | none | trace | slight |
| D (1%) | none | trace | severe |
| D (2%) | none | none | severe |
| D (3%) | none | none | severe |
| D (4%) | none | trace | severe |
| D (5%) | none | trace | severe |

As can be seen from the table, subsequent addition of iso-stearic acid to a non-leafing pigment flake produced with oleic acid appears to accelerate the agglomeration.

Example 7

Eight coating formulations were prepared using a non-leafing aluminium pigment in accordance with the invention. Compatability of the flake with the binder-solvent mixture and dispersability of the flake were comparable to commercially available non-leafing aluminium flake pigments.

*Formulation 1 — automotive type topcoat*

| Material | % by wt. | Tradename and Supplier (if applicable) |
|---|---|---|
| aluminium paste | 1.77 | |
| toluene | 22.64 | |
| alkyd resin | 59.05 | Beckosol 1307—50; Reichhold Chemicals, Inc. |
| urea formaldehyde accelerator | 16.54 | Beckamine 3555—60: Reichhold Chemicals, Inc. |

*Formulation 2 — alkyd acrylic air dry general purpose spray enamel*

| Material | % by wt. | Tradename and Supplier (if applicable) |
|---|---|---|
| aluminium paste | 6.0 | |
| toluene | 56.0 | |
| alkyd compatible acrylic ester resin | 28.0 | Acryloid B-99 (50); Rohm & Haas |
| polyester resin | 10.0 | Amberlac 2924; Rohm & Haas |

11

**0015725**

*Formulation 3 — acrylic air dry general purpose spray enamel*

| Material | % by wt. | Tradename and Supplier (if applicable) |
|---|---|---|
| aluminium paste | 6.0 | |
| toluene | 82.70 | |
| acrylic ester resin | 11.30 | Acryloid B-66 (50); Rohm & Haas |

*Formulation 4 — vinyl based primer*

| Material | % by wt. | Tradename and Supplier (if applicable) |
|---|---|---|
| aluminium paste | 7.42 | |
| toluene | 7.95 | |
| xylene | 5.10 | |
| naphtha | 1.46 | VM & P naphtha; Exxon |
| methyl acetate solvent | 50.60 | Methyl Cellusolve Acetate; Union Carbide |
| methyl ethyl ketone | 7.2 | |
| vinyl chloride acetate | 14.60 | VAGH Vinyl; Union Carbide |
| gelling agent | 4.15 | Bentone 38; N. L. Industries |
| dioctyl phthalate | 1.52 | Nuoplaz DOP; Tenneco |

*Formulation 5 — thermal acrylic baking automotive spray*

| Material | % by wt. | Tradename and Supplier (if applicable) |
|---|---|---|
| aluminium paste | 1.3 | |
| xylene | 11.5 | |
| aromatic solvent | 11.5 | Aromatic 100; Exxon |
| thermo acrylic resin | | PPG 550-1023; PPG Industries |

*Formulation 6 — nitrocellulose lacquer spray*

| Material | % by wt. | Tradename and Supplier (if applicable) |
|---|---|---|
| aluminium | 6.0 | |
| nitrocellulose lacquer | 56.40 | Sterling Lacquer #1088; Sterling Lacquer |
| lacquer thinner | 37.60 | T-28; Sterling Lacquer |

12

*Formulation 7 — high temperature silicone paint*

| Material | % by wt. | Tradename and Supplier (if applicable) |
|---|---|---|
| aluminium paste | 28.1 | |
| xylene | 7.6 | |
| silicone | 45.0 | #805; Dow Corning |
| silicone | 19.3 | #806A; Dow Corning |

*Formulation 8 — vinyl toluene hydrocarbon spray*

| Material | % by wt. | Tradename and Supplier (if applicable) |
|---|---|---|
| aluminium paste | 6.0 | |
| toluene | 75.2 | |
| copolymer of vinyltoluene/ alpha-methyl styrene monomers | 18.8 | Piccotex 75; Pennsylvania Industrial Chemical Corp. |

Pigments prepared in accordance with the invention of medium grade (prepared in Example 4, Formulation C) and extra fine grade (prepared in Example 4, Formulation A) were compared with corresponding, commercially available non-leafing pigments (as a control). The pigments prepared in Example 4, however, had a median particle size distribution approximately 12% less (finer) than the corresponding control composition. The commercial grade pigments were prepared in accordance with standard non-leafing milling techniques in the presence of oleic acid milling agent. These commercial grade materials contain stabilizers to retard agglomeration while those prepared in Example 4 (iso-stearic acid milling agent) did not.

Eight coating formulations were prepared using each of the four pigments and applied, for test purposes, according to the indicated method of application.

The formulations were prepared for each of the four pigments approximately 48 hours before the initial application to the test panels.

## TABLE 8

| Sample | Aluminium paste (wt. %) | Type of Coating Vehicle | Method of Application |
|---|---|---|---|
| 1 | 1.77 | automotive-type topcoat | spray |
| 2 | 6.00 | alkyl-acrylic air dry general purpose enamel | thin film spray |
| 3 | 6.00 | acrylic air dry general purpose enamel | spray |
| 4 | 7.42 | vinyl-based primer | brush |
| 5 | 1.30 | thermal acrylic baking automotive spray | spray |
| 6 | 6.00 | nitrocellulose lacquer spray | spray |
| 7 | 28.10 | high temperature silicone paint | brush |
| 8 | 6.00 | vinyl toluene hydro carbon spray | thin film spray |

Samples in accordance with Table 8 for the four pigments to be tested were applied to test panels according to the method of application indicated. Gloss (60°) and total reflectance were compared for each applied coating sample for each pigment as initially applied to the panel and after one week (the one week tests being performed in order to determine (1) room temperature (25°C) stability of the coating and (2) oven temperature (50°C) stability of the coating). In each case the formulations using the non-leafing pigment in accordance with the invention, without stabiliser, were comparable to formulations using control pigments which contained stabiliser. Formulations A and C, with median diameter of the particle size distribution approximately 12% finer than the corresponding control composition had greater hiding (opacity) yet performed comparably with regard to total reflectance and gloss.

**Claims**

1. An aluminium flake pigment bearing a surface layer of isostearic acid applied to the particles of said aluminium flake pigment in the course of a milling operation whereby the aluminium flake is rendered non-leafing and capable of storage without agglomeration, said isostearic acid being a mixture of saturated fatty acids of the general formula $C_{17}H_{35}COOH$.

2. A non-leafing aluminium flake pigment according to claim 1 further characterised in that said aluminium flake additionally bears a proportion of a known milling agent for production of non-leafing aluminium flake pigment, also applied to the course of a milling operation.

3. A non-leafing aluminium flake pigment according to claim 2 further characterised in that said known additional milling agent is an unsaturated fatty acid, such as oleic acid.

4. A non-leafing aluminium flake pigment according to any of claims 1 to 3 in paste form characterised by a post-milling addition of a small proportion of a fatty acid, such as lauric acid, for improving dispersability in a coating composition.

5. A non-leafing aluminium flake pigment according to any of claims 1 to 3 characterised by a post-milling addition of a small proportion of isostearic acid.

6. A process for producing an aluminium flake pigment by milling particulate aluminium in the presence of a milling agent to convert it to flake form, characterised in that the milling agent includes a substantial proportion of a branched chain saturated fatty acid.

7. A process according to claim 6 further characterised in that said branched chain saturated fatty acid is isostearic acid, said isostearic acid being a mixture of saturated fatty acids of the general formula $C_{17}H_{35}COOH$.

8. A process according to claim 7 further characterised in that the weight of isostearic acid present during milling is equal to 3—7% of the weight of the particulate aluminium.

9. A process according to any of claims 6 to 8 further characterised in that the milling agent includes an amount of another known non-leafing milling agent.

10. A process according to claim 9 further characterised in that said known non-leafing milling agent is oleic acid.

11. A process according to claim 9 further characterised in that the milling is performed in the presence of 3—7% isostearic acid and 1.5—3% of an unsaturated fatty acid, based on the weight of the aluminium, said isostearic acid being a mixture of saturated fatty acids of the general formula $C_{17}H_{35}COOH$.

12. A process according to claim 11 further characterised in that the unsaturated fatty acid is oleic acid.

13. A process according to claim 6 further characterised by milling the particulate aluminium to flake form in a ball mill in the presence of an amount of isostearic acid effective to act as a milling agent, an amount of an unsaturated fatty acid effective to substantially eliminate residual leafing and a liquid wet-milling vehicle for a time sufficient to provide aluminium flake pigment of desired particle size, said isostearic acid being a mixture of saturated fatty acids of the general formula $C_{17}H_{35}COOH$.

**Patentansprüche**

1. Aluminiumflockenpigment mit einer Oberflächenschicht aus Isostearinsäure, die auf die Teilchen des Aluminiumflockenpigments im Verlauf eines Mahlverfahrens aufgebracht wurde, wodurch die Aluminiumflocken nicht-abblätternd gemacht wurden und ohne Agglomeration gelagert werden können, wobei die Isostearinsäure eine Mischung aus gesättigten Fettsäuren der allgemeinen Formel $C_{17}H_{35}COOH$ ist.

2. Ein nicht-abblätterndes Aluminiumflockenpigment gemäss Anspruch 1, weiter gekennzeichnet dadurch, dass die Aluminiumflocke zusätzlich einen Anteil eines bekannten Mahlungsmittels zur Herstellung von nicht-abblätterndem Aluminiumflockenpigment, das ebenfalls im laufe des Mahlverfahren aufgebracht wurde, trägt.

3. Ein nicht-abblätterndes Aluminiumfockenpigment gemäss Anspruch 2, weiter gekennzeichnet dadurch, dass das bekannte zusätzliche Mahlungsmittel eine ungesättigte Fettsäure, wie Ölsäure, ist.

4. Ein nicht-abblätterndes Aluminiumflockenpigment gemäss einem der Ansprüche 1 bis 3 in Pastenform, gekennzeichnet durch eine Zugabe nach dem Mahlen eines geringen Anteils einer Fettsäure, wie Laurinsäure, zur Verbesserung der Dispergierfähigkeit in einer Überzugszusammensetzung.

5. Ein nicht-abblätterndes Aluminiumflockenpigment gemäss einem der Ansprüche 1 bis 3, gekennzeichnet durch eine Zubage nach dem Mahlen eines kleinen Anteils an Isostearinsäure.

6. Verfahren zum Herstellen eines Aluminiumflockenpigments durch Mahlen von teilchenförmigem Aluminium in Gegenwart eines Mahlungsmittels zum Umwandeln in die Flockenform, dadurch gekennzeichnet, dass das Mahlungsmittel einen erheblichen Anteil an einer verzweigten gesättigten Fettsäure enthält.

7. Verfahren gemäss Anspruch 6, weiter gekennzeichnet dadurch, dass die verzweigte gesättigte Fettsäure Isostearinsäure ist, wobei die Isostearinsäure eine Mischung einer gesättigten Fettsäure der allgemeinen Formel $C_{17}H_{35}COOH$ ist.

8. Verfahren gemäss Anspruch 7, weiter gekennzeichnet dadurch, dass das Gewicht der Isostearinsäure, die während das Mahlens vorliegt, 3 bis 7 Gew.% des teilchenförmigen Aluminiums ausmacht.

9. Verfahren gemäss einem der Ansprüche 6 bis 8, weiter gekennzeichnet dadurch, dass das Mahlungsmittel eine Menge eines anderen bekannten, nicht-abblätternden Mahlungsmittels einschliesst.

10. Verfahren gemäss Anspruch 9, weiter gekennzeichnet dadurch, dass das bekannte nichtabblätternde Mahlungsmittel Oleinsäure ist.

11. Verfahren gemäss Anspruch 9, weiter gekennzeichnet dadurch, dass das Mahlen in Gegenwart von 3 bis 7% Isostearinsäure und 1,5 bis 3% einer ungesättigten Fettsäure, bezogen auf das Gewicht des Aluminiums, durchgeführt wird, wobei die Isostearinsäure eine Mischung von gesättigten Fettsäuren der allgemeinen Formel $C_{17}H_{35}COOH$ ist.

12. Verfahren gemäss Anspruch 11, weiter gekennzeichnet dadurch, dass die ungesättigte Fettsäure Oleinsäure ist.

13. Verfahren gemäss Anspruch 6, weiter gekennzeichnet, dadurch, dass das Mahlen des teilchenförmigen Aluminiums in die Flockenform in einer Kugelmühle in Gegenwart einer Menge an Isostearinsäure, die wirksam als Mahlungsmittel dient, einer Menge an einer ungesättigten Fettsäure, die wirksam ist, dass im wesentlichen restliches Abblättern unterdrückt wird, une eines flüssigen Nassmahlungsträgers während einer ausreichenden Zeit, um ein Aluminiumflockenpigment der gewünschten Teilchengrösse zu erzielen, durchgeführt wird, wobei die Isostearinsäure eine Mischung von gesättigten Fettsäuren der allgemeinen Formel $C_{17}H_{35}COOH$ ist.

## Revendications

1. Un pigment en paillettes d'aluminium portant une couche superficielle d'acide isostéarique appliquée sur les particules de ce pigment en paillettes d'aluminium au cours d'une opération de broyage dans laquelle les paillettes d'aluminium sont rendues non pelliculantes et aptes à une conservation sans formation d'agglomérats, cet acide isostéarique consistant en un mélange d'acides gras saturés de formule générale $C_{17}H_{35}COOH$.

2. Un pigment en paillettes d'aluminium non pelliculantes selon la revendication 1, caractérisé en outre en ce que les paillettes d'aluminium portent en plus une certaine proportion d'un agent de broyage connu pour la production de pigments en paillettes d'aluminium non pelliculantes, également appliqué dans le cours d'une opération de broyage.

3. Un pigment en paillettes d'aluminium non pelliculantes selon la revendication 2, caractérisé en outre en ce que cet agent de broyage additionnel connu est un acide gras insaturé tel que l'acide oléique.

4. Un pigment en paillettes d'aluminium non pelliculantes selon l'une quelconque des revendications 1 à 3, à l'état de pâte, caractérisé en ce qu'on lui a ajouté après broyage une petite proportion d'un acide gras tel que l'acide laurique afin d'améliorer la dispersabilité dans une composition de revêtement.

5. Un pigment en paillettes d'aluminium non pelliculantes selon l'une quelconque des revendications 1 à 3, caractérisé en ce qu'on lui a ajouté après broyage une petite proportion d'acide isostéarique.

6. Un procédé de préparation d'un pigment en paillettes d'aluminium par broyage d'un aluminium en particules en présence d'un agent de broyage en vue de le mettre à l'état de paillettes, caractérisé en ce que l'agent de broyage comprend une proportion substantielle d'un acide gras saturé à chaîne ramifiée.

7. Un procédé selon la revendication 6, caractérisé en ce que cet acide gras saturé à chaîne ramifiée est l'acide isostéarique, cet acide isostéarique consistant en un mélange d'acides gras saturés de formule générale $C_{17}H_{35}COOH$.

8. Un procédé selon la revendication 7, caractérisé en outre en ce que le poids d'acide isostéarique présent au cours de mélange représente de 3 à 7% du poids de l'aluminium en particules.

9. Un procédé selon l'une quelconque des revendications 6 à 8, caractérisé en outre en ce que l'agent de broyage comprend une certaine proportion d'un autre agent de broyage non pelliculant connu.

10. Un procédé selon la revendication 9, caractérisé en outre en ce que cet agent de broyage non pelliculant connu est l'acide oléique.

11. Un procédé selon la revendication 9, caractérisé en outre en ce que le broyage est effectué en

**0015725**

présence de 3 à 7% d'acide isostéarique et de 1,5 à 3% d'un acide gras insaturé, par rapport au poids de l'aluminium, cet acide isostéarique consistant en un mélange d'acides gras saturés de formule générale $C_{17}H_{35}COOH$.

12. Un procédé selon la revendication 11, caractérisé en outre en ce que l'acide gras insaturé est l'acide oléique.

13. Un procédé selon la revendication 6, caractérisé en outre en ce que l'on broie l'aluminium en particules pour le mettre sous la forme de paillettes dans un broyeur à boulets en présence d'une quantité d'acide isostéarique efficace en tant qu'agent de broyage, d'une certaine proportion d'un acide gras insaturé efficace pour supprimer pratiquement un pelliculage résiduel et d'un véhicule liquide de broyage au mouillé pendant une durée suffisante pour obtenir un pigment en paillettes d'aluminium à la dimension de particule voulue, cet acide isostéarique consistant en un mélange d'acides gras saturés de formule générale $C_{17}H_{35}COOH$.